# EUROPEAN PATENT APPLICATION

(11) **EP 0 797 064 A2**
(43) Date of publication of application: **24.09.1997**
(21) Application number: 97104164.5
(22) Date of filing: 12.03.1997
(51) Int. Cl.: F28D 1/03

(54) **Heat-radiating element made of pressed steel plate and method for manufacturing it**

(30) Priority: 20.03.1996 IT TO960217
(71) Applicant: T.D.A. TECNOLOGIE D'AUTOMAZIONE S.r.l., 12080 Pianfei (Cuneo) (IT)
(72) Inventor: Gubbini, Amulio, 10080 San Benigno Canavese (IT); Parpaiola, Pier Antonio, 10091 Alpignano (IT)
(74) Representative: Modiano, Guido, Dr.-Ing.

(57) **Abstract**

A heat-radiating element made of pressed steel plate, comprising a flat panel (12), which is meant to constitute the exposed surface of said element, which is mated and connected, by welding, to a profiled plate (13) having raised ribs (13a) which are formed by pressing and delimit, together with said flat panel, corresponding collectors (14) for the circulation of the heating fluid.

## Description

The present invention relates to a heat-radiating element made of pressed steel plate and to a method for manufacturing it.

More specifically, the invention relates to a heat-radiating element comprising two mated and mutually welded metal plate shells which delimit a plurality of collectors for the circulation of the heating fluid.

These heat-radiating elements entail many functional advantages, the main one being a high thermal efficiency and a low manufacturing cost, but they have aesthetic drawbacks owing to the presence of the collectors, which are visible in the form of raised ribs on the exposed surfaces of the radiating element.

This drawback, which significantly limits their use especially in home heating systems, has so far been obviated by providing, on the body of the radiating element, a flat front panel, also made of steel plate, which conceals said ribs, significantly improving the aesthetics of said radiator.

Of course, in view of the substantially aesthetic function of the flat front panel meant to constitute the exposed surface of the radiating element, connection of the panel to the body of the element must be provided by methods which do not alter the surface continuity of the panel. Typically, in order to avoid alterations of the surface of the front panel, the panel is glued to the body of the radiating element with spacers interposed, or it is connected by projection welding, limiting the physical contact between the panel and the body of the radiating element in specific and substantially point-like regions.

In both cases, the application of the front panel significantly complicates the process for manufacturing the radiating element and just as significantly increases its weight and is therefore economically disadvantageous.

A principal aim of the present invention is substantially to eliminate these drawbacks, and within the scope of this general aim an important object of the invention is to provide a heat-radiating element of the specified type wherein the applied front panel is eliminated but the aesthetic appearance of conventional radiating elements provided with the panel is maintained and improved.

This is achieved, according to the present invention, by providing a radiating element as defined in the appended claims.

Substantially, the invention is based on the concept of providing a steel plate radiator by mating and connecting, by mutual welding, a flat panel meant to constitute the exposed surface of the radiator to a profiled plate provided with raised ribs which are formed by pressing and delimit, together with the flat panel, corresponding collectors for the circulation of the heating fluid.

A heat-radiating element having these characteristics has, in addition to obvious aesthetic advantages, considerable functional and economical advantages with respect to conventional radiating elements and particularly a significant reduction in production cost and weight. The metal plate pressing operations are in fact reduced by 50% for an equal number of produced radiating elements and the operations for applying the front panel adopted in conventional radiating elements are entirely eliminated.

The radiating element according to the invention is thus obtained with a considerably simplified production process which substantially uses the following operating steps:
-- mating the profiled plate and the flat panel and providing a first set of projection welds, typically of the capacitor-discharge type, of said plate and panel at the mutual contact regions located between said raised ribs of the profiled plate;
-- mechanically folding the protruding edge of the flat panel over the recessed edge of the profiled plate and forming a connecting flap which surrounds the radiating element like a perimetric border;
-- performing a second perimetric welding by laser, preferably at the cropped edge of said connecting flap, consequently stably and hermetically connecting the folded edge of the flat panel on the recessed edge of the profiled plate.

Further characteristics and advantages of the heat-radiating element according to the present invention and of the corresponding manufacturing process will become apparent from the following detailed description and with reference to the accompanying drawings, given only by way of non-limitative example and wherein:
figure 1 is a partially exploded perspective view of a heat-radiating element according to the present invention;
figure 2 is a transverse sectional view of the heat-radiating element of figure 1, illustrating the first step for mutually welding the flat panel and the profiled plate of said radiating element;
figure 2a is an enlarged-scale view of a detail of figure 2;
figure 3 is an enlarged-scale sectional view, similar to figure 2, of the radiating element produced by the welding step of figure 2;
figures 3a, 3b, and 3c are views of a detail of figure 3 and illustrate in detail the step for folding the edge of the flat panel over the edge of the profiled plate;
figures 4a and 4b are detail views, similar to figures 3a and 3b, of respective different embodiments of the folding step;
figure 5 is a perspective view of the second perimetric welding step;
figure 5a is a highly enlarged transverse sectional view, taken along the plane Va-Va of figure 5;
figure 5b is a sectional view, similar to figure 5a, of a different embodiment of the second welding step;
figure 6 is a perspective view of the finished radiating element.

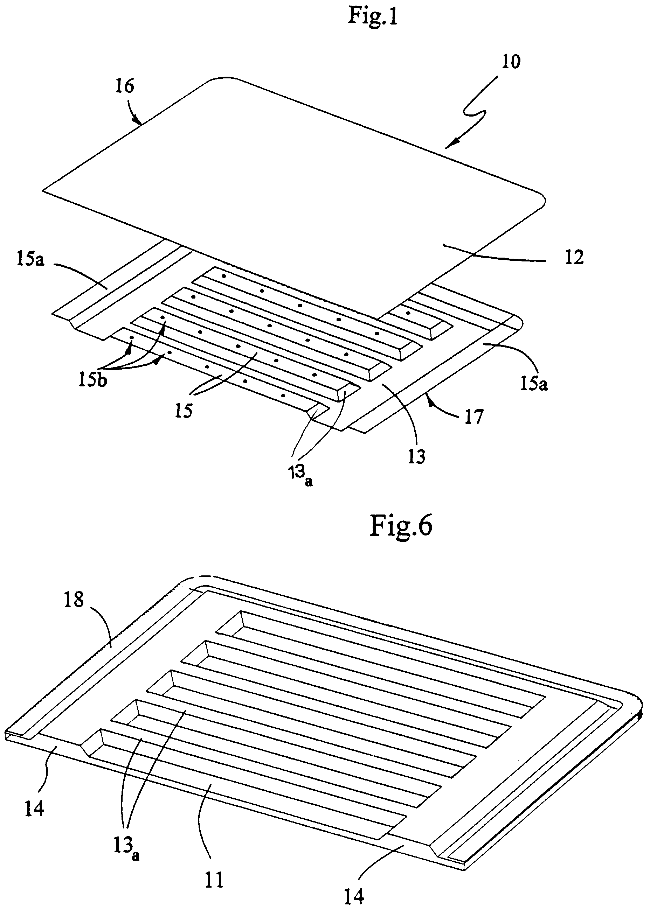

Initially with reference to figures 1 and 6, the reference numeral 10 generally designates a heat-radiating element according to the invention, which substantially comprises a hollow body 11 formed by the mating of a flat panel 12, meant to constitute the exposed surface of the radiating element, with a profiled plate 13 provided with raised ribs 13a which are obtained by pressing and delimit, together with the panel 12, collectors 14 for the circulation of the heating fluid.

The flat panel 12 and the profiled plate 13 are in contact with each other at regions 15 located between the raised ribs 13a and at region 15a which runs along the perimetric rim of the plates.

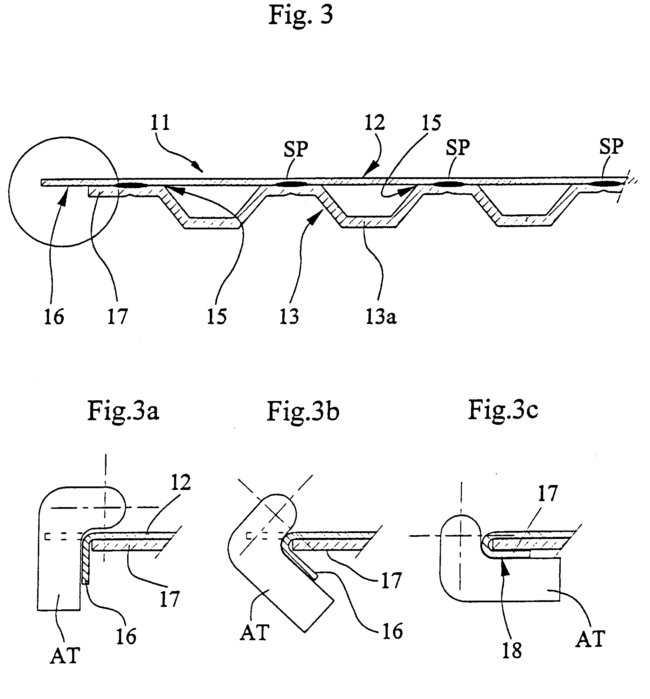

As clearly shown in figures 3 and 6, the flat panel 12 has an edge 16 protruding with respect to a correspondingly recessed edge 17 of the profiled plate 13, and the protruding portion of the edge 16 is folded over the recessed edge 17 so as to form a connecting flap 18 which surrounds the radiating element 10 like a perimetric border.

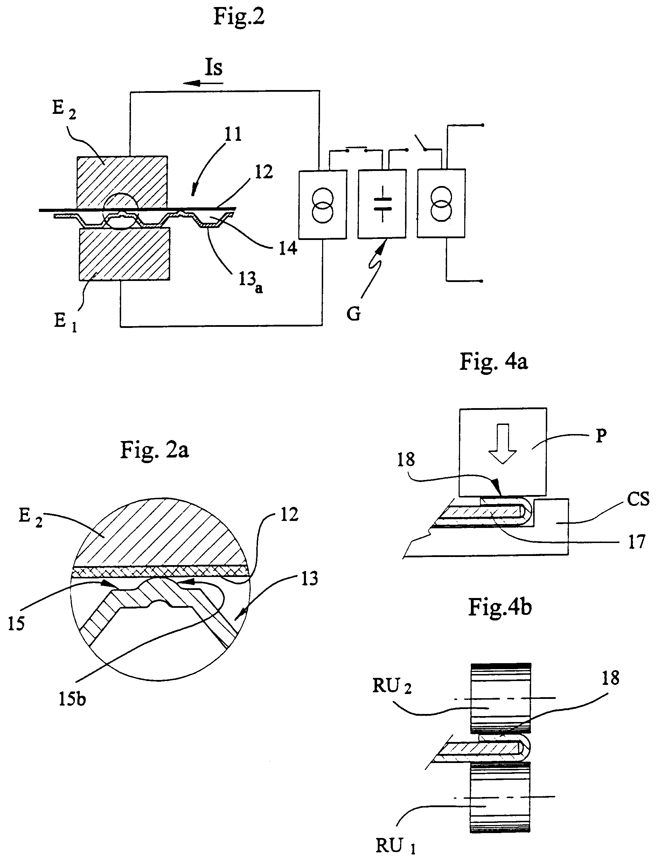

With reference now to figures 2 to 5, it is shown that the method for manufacturing the radiating element 10 comprises the step for mating the flat panel 12 with the profiled plate 13, followed by the execution of a first set of autogenous projection welds SP of said plates, performed at regions 15 of mutual contact of said plate and said panel and excluding the perimetric contact region 15a. The projection welds are performed by means of mutually opposite electrodes E1-E2 which are subjected to the voltage of a capacitor-discharge generator G capable of producing a welding current Is which, by passing through the plate and the panel, welds them to each other at said electrodes E1-E2.

In a per se known manner, and in order to allow to perform welds SP which do not alter the outside surface of the flat panel 12, in the contact regions 15 of the profiled plate 13 there are provided protruding studs 15b obtained by pressing, the purpose whereof is to concentrate the welding current Is at the point-like contact region between each stud and the flat panel 12.

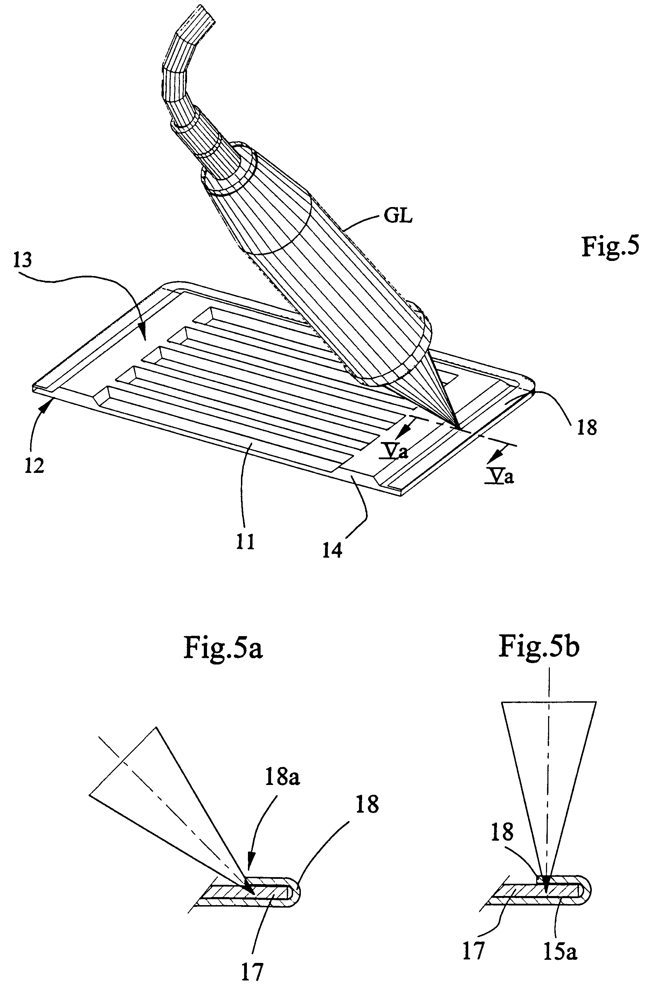

The first set of welds, performed in the described manner, produces the semifinished component shown in detail in figure 3, which is subjected to a subsequent step for the mechanical folding of the protruding edge 16 of the flat panel 12 onto the recessed edge 17 of the profiled plate 13. This folding step, which forms the joining flap 18, is preferably performed as shown in the sequence of figures 3a-3b-3c with the aid of a right-angled bending fixture generally referenced by AT. As an alternative, the final folding step can be performed by pressing, as shown in figure 4a, by using a moving male plug P and a matching reaction die CS, or by rolling, by means of mutually opposite rollers RU1-RU2 as shown in figure 4b.

The step for forming the joining flap 18 is followed by the execution of a second perimetric weld, which is performed by means of a laser beam generator GL (figure 5), which causes the stable and hermetic connection of the folded edge 16 of the flat panel 12 to the recessed edge 17 of the profiled plate 13.

Preferably, the weld is performed, as shown in the detail of figure 5a, at the cropped edge 18a of the folded joining flap 18. As an alternative, and as shown in the detail of figure 5b, the laser weld can be provided by "pass-through" welding, in which case the panel 12 and the plate 13 are welded at the region 15a of the respective perimetric rim.

As an alternative to what has been described above, it is also possible to provide the second perimetric weld, performed by pass-through welding, before the folding step which forms the joining flap 18. This allows to perform optional watertightness tests of the radiating element before the final step for folding the joining flap, in order to avoid the final step if the radiating element being produced is rejected.

Of course, without altering the concept of the invention, the details of execution of the radiating element and the methods for performing the corresponding manufacturing process may be altered extensively with respect to what has been described and illustrated by way of non-limitative example without thereby abandoning the scope of the invention defined by the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A heat-radiating element made of pressed steel plate, characterized in that it comprises a flat panel (12), which is meant to constitute the exposed surface of said element, which is mated and connected, by welding, to a profiled plate (13) having raised ribs (13a) which are formed by pressing and delimit, together with said flat panel, corresponding collectors (14) for the circulation of the heating fluid.

2. A heat-radiating element according to claim 1, characterized in that the flat panel (12) and the profiled plate (13) are in contact with each other along the respective edges and at regions (15) located between the raised ribs (13a) and in that in said regions the panel (12) and the plate (13) are interconnected by means of autogenous projection-welding spots (SP).

3. A heat-radiating element according to claim 2, characterized in that the raised ribs (13a) of the profiled plate (13) are provided with protruding studs (15b) for concentrating the welding current.

4. A heat-radiating element according to claims 1 and 3, characterized in that the flat panel (12) has an edge (16) which protrudes with respect to the correspondingly recessed edge (17) of the profiled plate (13), and in that the protruding portion of the first edge (16) is folded over the portion of the recessed edge (17) in order to form a joining flap (18) which surrounds the radiating element (10) like a perimetric border.

5. A heat-radiating element according to claims 1 and 4, characterized in that it comprises, at said joining flap (18), a sealing weld obtained by means of a laser beam.

6. A method for manufacturing the heat-radiating element according to claims 1 to 5, characterized in that it comprises the following operating steps:
-- mating the profiled plate (13) and the flat panel (12) and providing a first set of projection welds (SP) of said panel and plate at the mutual contact regions (15) located between the raised ribs (13a) of the profiled plate;
-- mechanically folding the protruding edge (16) of the flat panel over the recessed edge (17) of the profiled plate and forming a connecting flap (18) which surrounds the radiating element (10) like a perimetric border;
-- performing a second perimetric welding by laser, consequently stably and hermetically connecting the edge of the flat panel (12) on the recessed edge of the profiled plate (13).

7. A method according to claim 6, characterized in that the first set of projection welds (SP) is provided by means of a capacitor-discharge generator.

8. A method according to claim 6, characterized in that the second perimetric welding is provided at the cropped edge (18a) of said joining flap (18).

9. A method according to claim 6, characterized in that the second perimetric welding is provided by pass-through action and welds the mated plates (12,13) at the contact region (15a) of the respective perimetric rim.
